# EUROPEAN PATENT SPECIFICATION

(11) **EP 2 046 123 B1**
(45) Date of publication and mention of the grant of the patent: **24.09.2014**
(21) Application number: 07799728.6
(22) Date of filing: 20.07.2007
(51) Int. Cl.: A01N 43/40, A01N 41/10, A01N 43/653, A01N 43/54, A01N 37/46, A01N 43/36, A01N 51/00, A01N 25/12, A01N 25/14

(54) **CONTROLLED RELEASE GRANULES**
GRANULAT MIT KONTROLLIERTER FREISETZUNG
GRANULÉS À LIBÉRATION CONTRÔLÉE

(30) Priority: 24.07.2006 US 820137 P
(43) Date of publication of application: 15.04.2009
(73) Proprietor: Syngenta Participations AG, 4058 Basel (CH)
(72) Inventor: PEARSON, Andrew, Greensboro, North Carolina 27409 (US); CHOW, Victor, Greensboro, North Carolina 27409 (US); REYNOLDS, Johnny, Greensboro, North Carolina 27409 (US); SWANSON, James, Greensboro, North Carolina 27409 (US)
(74) Representative: Syngenta International AG
(86) International application number: PCT/US2007/073944
(87) International publication number: WO 2008/014185

(56) References cited:
- EP-A1- 0 900 524
- EP-A2- 0 021 477
- EP-A2- 0 415 569
- WO-A1-93/05652
- WO-A2-01/78509
- US-A- 5 912 207
- US-A1- 2004 033 897
- Armand Peppermann: "Slow release formulations of metribuzin based on alginate-kaolin-linseed oil", journal of controlled release, 1 January 1993 (1993-01-01), pages 21-30, XP55032646, Retrieved from the Internet: URL:http://ac.els-cdn.com/016836599390205J /1-s2.0-016836599390205J-main.pdf?_tid=f0c d2ff287b76c0ef3eaf96d7e95a12b&acdnat=13421 62497_fcc65785f677121200a06a33ac8d6814 [retrieved on 2012-07-13]
- Armand Peppermann: "Controlled release formulations of alachlor based on calcium alginate", journal of controlled release, 1 January 1995 (1995-01-01), pages 17-23, XP55032651, Retrieved from the Internet: URL:http://ac.els-cdn.com/0168365994001117 /1-s2.0-0168365994001117-main.pdf?_tid=54b 8b805c4adee5feac6cdc18539509f&acdnat=13421 62931_48adf3786d44e209f2755b2aa7a6d02b [retrieved on 2012-07-13]

## Description

The present invention relates to a controlled release granule technology, methods of preparing such a granule and methods for using the granule in the control of pests.

The protection of crops from pests, and weeds that inhibit crop growth is a constantly recurring problem in agriculture. To help combat these problems, researchers in the field of synthetic chemistry have produced an extensive variety of chemicals and chemical formulations effective in the control of such pests and weeds. Chemical pesticides of many types have been disclosed in the literature and a large number are in commercial use. Commercial pesticides and some that are still in development are described in 'The Pesticide Manual', 13th Edition, published 2003 by the British Crop Protection Council.

While there are a number of different formulation types that can be used to apply pesticides, for certain agricultural, horticultural and other pest control applications it is often desirable to formulate the pesticide as dry spreadable or broadcast granules, as opposed to wettable powders or water dispersible granules (or, indeed, liquid formulations) that are designed for admixing in large volumes of water such as tank mixes and ultimately sprayed upon sites to be treated.

Such dry spreadable granules are important commercial products because of their ability to eliminate undesirable vegetation in large areas of cultivated vegetation and because of their ease of application, either by hand or mechanical means. For example, a practical and labour-saving approach to selective herbicide delivery in areas such as golf courses, parks, lawns, gardens and woodlands has been broadcast application of granular herbicide products via rotary spreader.

In such granule formulations, it is important to balance the amount of pesticide, so as to apply enough pesticide to control the target pest or weed species and yet cause only minimal damage to the crop species. It is therefore an object of the present invention to provide a controlled release pesticide granule which minimises the damage to the crop species.

Controlled release technology is already widely used in the field of agriculture, particularly for granular fertiliser products. Peppermann et al. (1993) Journal of Controlled Release 26(1), 21-30 relates to slow release formulations of the herbicide metribuzin, based on alginate-kaolin-linseed oil. Peppermann et al. (1995) Journal of Controlled Release 34(1), 17-23 relates to granular controlled release formulations of the herbicide alachlor, based on calcium alginate. EP0415569 relates to an agrochemical composition for applying to an aquatic environment, such as a rice paddy-field. EP0021477 relates to an oil based pesticidal composition. WO01/78509 relates to a method for producing wax premixes containing agrochemical active substances. WO93/05652 relates to a method for producing herbicide granules. EP0900524 relates to a water-floating microbial pesticide.

Many existing controlled release granule technologies are based on applying a coating to the outside of a granule carrier. There is a need to develop alternative controlled release granule technologies that are suitable for the release of pesticides. Further, there is a need for a technology in which the rate of release can be tailored to the particular active ingredient and release properties desired.

Accordingly, the present invention provides a controlled release granule comprising a solid substrate, a herbicide selected from the group consisting of mesotrione and a compound of formula 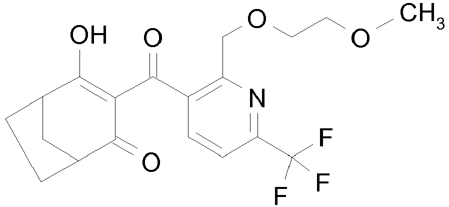 and C₄ to C₁₈ alkyl ester oil present in the granule at a concentration of between 5 wt% and 30 wt%, the pesticide and oil being distributed throughout the granule.

In addition to decreased damage to the crop species, the controlled release granules of the invention provide further advantages such as reducing pesticide spike concentrations in the environment, prolonging residual activity and lowering the application rate as well as reducing the number of applications of pesticide. Further, the present invention provides improved crop safety without reducing biological efficacy.

The release rate of the granule is controlled by both the amount and type of oil used. The more hydrophobic the oil, the slower the granule disintegrates and the slower the pesticide is released. Similarly, larger amounts of a hydrophobic oil will also lead to slower disintegration, and hence release rates, than smaller amounts of oil.

Oils include, but are not limited to, C2 to C22 alkyl esters (such as methyl oleate), triglycerides (such as vegetable oils, soybean oils and corn oil), paraffins and waxes (such as Sunspray™ and other mineral oils), aromatic oils (such as Aromatic 100 and Aromatic 200, both available from ExxonMobil Chemicals), lactate esters (such as butyl lactate and 2-ethyl-hexyl lactate) and dibasic esters and dimethylamides. Of the oils mentioned, it is noted that paraffins, waxes and long chain alkyl esters (e.g. C8 to C22) are considered to be more hydrophobic and likely to lead to slower release of the mesotrione from the granule. More hydrophilic oils such as lactate esters and shorter chain alkyl esters (e.g. C2 to C7) are likely to lead to a faster release granule. Suitably, the oil used in the granules of the present invention is a C4 to C18 alkyl ester. More suitably, the oil is methyl oleate. Mixtures of oils, such as those listed above, may also be used. For example, it may be desirable to mix a hydrophobic oil and a hydrophilic oil to produce a granule that gives an initial rapid release of pesticide, followed by a slow release of pesticide that continues for several weeks.

The choice of oil depends on the desired release properties of the granule (for example, fast release or slow release), and the physical properties of the pesticide (for example water soluble or oil soluble) to be released. The person skilled in the art is readily able to choose an oil or mixture of oils to suit the specific requirements of his granule. Other hydrophobic materials such as hydrophobic silicas may be used in place of, or in addition to, oils.

Suitably, the oil is present in the granule at a concentration of between 5 wt% and 30 wt%. More suitably, the oil is present at a concentration of between 10 and 20 wt%. More suitably, the oil is present at a concentration of between 12 and 18 wt%. Most suitably, the oil is present at 15.8 wt%. Of course, it is noted that increasing the amount of oil tends to lead to a slower disintegration of the granule and hence a slower release rate of mesotrione: the skilled man will therefore be able to pick the appropriate oil and concentration of oil for the release rate he requires.

The pesticide and oil are distributed throughout the granule rather than coated on the outside of the granule. To this end, the pesticide and oil are homogeneously mixed with the granule components prior to granulation. The pesticide may be dissolved in the oil, or be present as an emulsion or suspension.

Herbicides include but are not limited to one or more of the following: sulfonylureas such as trifloxysulfuron, nicosulfuron, metsulfuron, amidosulfuron, sulfosulfuron and triasulfuron; triazines such as simazine and atrazine; dinitroanilines such as prodiamine, pendimethalin and oryzalin; triazolinones such as sulfentrazone, thiencarbazone and carfentrazone; pyridines such as dithiopyr and triclopyr; ureas such as diuron and fenuron; difenyl ethers such as formesafen and oxyfluorofen; chloroacetamides such as acetochlor and s-metolachlor; cyclohexanedione oximes such as clethodim; isoxazoles such as isoxaflutole; triketones such as mesotrione, tembotrione, topramezone, a compound of the formula 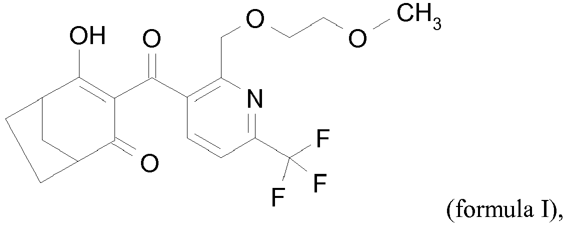 and sulcotrione; bipyridyliums such as diquat and paraquat; glycines such as glyphosate; phosphinic acids such as glufosinate; and benzoic acids such as dicamba.

Particularly preferred herbicides include mesotrione, and the compound of formula I. Mesotrione (2-(2'-nitro-4'-methylsulphonylbenzoyl)-1,3-cyclohexanedione) is a member of an important class of selective herbicides, the triketones and works by affecting carotenoid biosynthesis. In the acid form, its structure can be represented as:

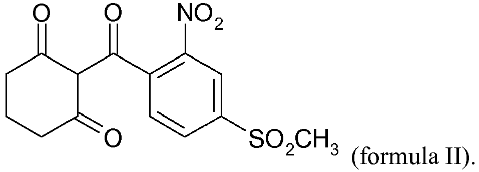

In addition to the acid form, mesotrione also forms salts and metal chelates, for example, a copper chelate. These metal chelates are disclosed, *inter alia,* in US Patent No. 5,912,207 where they are shown to have unexpectedly superior stability in certain environments when compared to unchelated mesotrione.

As used herein, the designation 'mesotrione' includes the salts and chelated forms of mesotrione as well as the acid form and also includes any enolic tautomeric forms that may give rise to geometric isomers. Furthermore, in certain cases, the various substituents and/or chelated forms may contribute to optical isomerism and/or stereoisomerism. All such tautomeric forms, racemic mixtures and isomers are included within the scope of the present invention.

Suitable salts of mesotrione include salts of cations or anions which are known and accepted in the art for the formation of salts for agricultural or horticultural use. Such salts may be formed, for example, using amines, alkali metal bases, alkaline earth metal bases and quaternary ammonium bases.

Metal chelates of 2-(substituted benzoyl)-1,3-cyclohexanedione compounds including mesotrione are described, *inter alia,* in US Patent No. 5,912,207. In one embodiment, suitable metal chelates of mesotrione have the general structure: 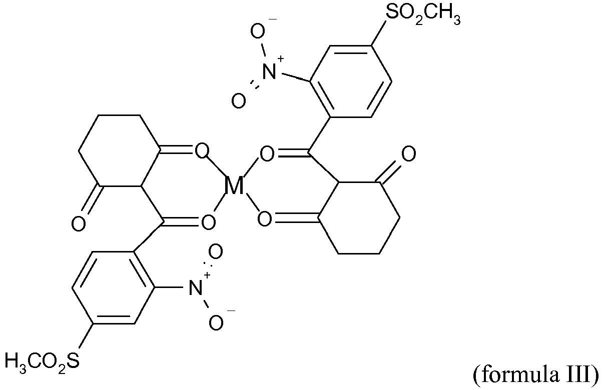 wherein M represents a di- or trivalent metal ion.

Suitably, the di- or trivalent metal ion may be a Cu²⁺, Co²⁺ Zn²⁺, Ni²⁺, Ca²⁺, Al³⁺, Ti³⁺ or Fe³⁺ ion. More suitably, the metal ion may be a divalent transition metal ion such as Cu²⁺, Ni²⁺, Zn²⁺ and Co²⁺. More suitably the metal ion may be Cu²⁺ and Zn²⁺ and most suitably Cu²⁺.

Herbicidal metal chelates of mesotrione for use in this invention may be prepared by the methods described in the aforementioned US Patent, or by the application and adaptation of known methods used or described in the chemical literature. In particular, any appropriate salt which would be a source of a di- or trivalent metal ion may be used to form the metal chelate of the dione compound in accordance with this invention. Particularly suitable salts include chlorides, sulphates, nitrates, carbonates, phosphates and acetates.

The granule of the invention contains a herbicidally effective amount of herbicide. The term 'herbicide' as used herein denotes a compound which controls or modifies the growth of plants. The term 'herbicidally effective amount' indicates the quantity of such a compound or combination of such compounds which is capable of producing a controlling or modifying effect on the growth of plants. Controlling or modifying effects include all deviation from natural development, for example: killing, retardation, leaf burn, albinism, dwarfing and the like. For example, plants that are not killed are often stunted and non-competitive with flowering disrupted. The term 'plants' refers to all physical parts of a plant, including seeds, seedlings, saplings, roots, tubers, stems, stalks, foliage and fruits.

Insecticides include, but are not limited to, one or more of the following: abamectin, cyanoimine, acetamiprid, thiodicarb, nitromethylene, nitenpyram, clothianidin, dinotefuran, fipronil, lufenuron, pyripfoxyfen, thiacloprid, fluxofenime, imidacloprid, thiamethoxam, chloranthraniliprole, beta cyfluthrin, lambda cyhalothrin, fenoxycarb, diafenthiuron, pymetrozine, diazinon, disulphoton, profenofos, furathiocarb, cyromazin, cypermethrin, tau-fluvalinate, tefluthrin, spinosad, etofenprox, carbosulfan, propaphos, permethrin, bensultap, benfuracarb, rynaxypyr and *Bacillus thuringiensis* products. Particularly preferred suitable pesticides include abamectin, thiodicarb, cyanoimine, acetamiprid, nitromethylene, nitenpyram, clothianidin, dinotefuran, fipronil, thiacloprid, imidacloprid, thiamethoxam, chloranthraniliprole, beta cyfluthrin, lambda cyhalothrin and tefluthrin. In particular there may be mentioned thiamethoxam.

A granule may contain an insecticidally effective amount of insecticide. The term 'insecticidally effective amount' indicates the quantity of such a compound or combination of compounds which is capable of controlling or inhibiting insects. Controlling or modifying effects include inhibition of feeding, growth retardation, prevention of reproduction, paralysis, killing and the like.

Fungicides include, but are not limited to, one or more of the following: azoxystrobin, bitertanol, carboxin, Cu₂O, cymoxanil, cyproconazole, cyprodinil, dichlofluamid, difenoconazole, diniconazole, epoxiconazole, fenpiclonil, fludioxonil, fluoxastrobin, fluquiconazole, flusilazole, flutriafol, furalaxyl, guazatin, hexaconazole, hymexazol, imazalil, imibenconazole, ipconazole, kresoxim-methyl, mancozeb, metalaxyl, mefenoxam, metconazole, myclobutanil, oxadixyl, pefurazoate, penconazole, pencycuron, prochloraz, propiconazole, pyroquilone, (±)-*cis-*1-(4-chlorophenyl)-2-(1*H*-1,2,4-triazol-1-yl)cycloheptanol, spiroxamin, tebuconazole, thiabendazole, tolifluamide, triazoxide, triadimefon, triadimenol, trifloxystrobin, triflumizole, triticonazole, uniconazole, isoprothiolone, carpropamid, thifluzamide, tiadinil, probenazole, diclocymet, furametpyr and orysastrobin. Particularly suitable fungicides include azoxystrobin, propiconazole, difenoconazole, fludioxonil, thiabendazole, tebuconazole, metalaxyl, mefenoxam, myclobutanil, fluoxastrobin, tritaxonazole and trifloxystrobin. In particular, there may be mentioned azosystrobin, fludioxonil and mefenoxam.

A granule may contains a fungicidally effective amount of fungicide. The term 'fungicidally effective amount' indicates the quantity of such a compound or combination of compounds which is capable of preventing, inhibiting or controlling the growth of fungi.

There may be mentioned other active ingredients that are considered herein to be pesticides, such as plant growth regulators and plant activators. Suitable plant growth regulators include paclobutrazol and trinexapac-ethyl. Suitable plant activators include acibenzolar-S-methyl.

Preferably, the pesticide is selected from the list consisting of mesotrione, and the compound of formula I. Suitably, the pesticide is mesotrione. Suitably, the pesticide is the compound of formula I.

Suitably, the pesticide is present in the granule at a concentration of between about 0.05 and about 2.0 weight% (wt%). More suitably, the pesticide is present at between about 0.12 and about 1.0 wt%. Most suitably, the pesticide is present at between about 0.12 and 0.4 wt%.

Inert materials that can be used to formulate the solid substrate include, but are not limited to, dried clay, calcium carbonate, brick, pumice, pyrophyllite, kaolin, dolomite, plaster, wood flour, ground corn cobs, ground peanut hulls, sugars, sodium chloride, sodium sulphate, sodium silicate, sodium borate, magnesia, mica, iron oxide, zinc oxide, titanium oxide, antimony oxide, cryolite, vermiculite calcinated lime, gypsum, perlite, diatomaceous earth, bentonite clay, calcium sulphate and mixtures thereof. Examples of inert materials suitable for preparing the slow release pesticidal compositions of the invention are found in US Patent Nos. 5,041,410; 5,219,818; 5,229,348; 6,231,660; 6,375,969; 6,416,775 and 6,613,138. In a typical controlled release granule of the present invention, the inert material may make up the majority of the granule. Suitably, the inert material may be present at a concentration of up to about 90 wt%. However, as further materials are added to the granule, the amount of inert material is decreased accordingly. In particular, when the granules of the present invention further comprise a fertiliser material (as described below), the content of the inert material may be significantly reduced to, for example, about 20 wt%.

Suitably, the solid substrate is formed from clay, and most suitably from kaolin clay.

The granules of the present invention may further comprise a fertiliser material. As used herein, the term 'fertiliser material' is defined as any substance capable of supplying plant nutrients or minerals, e.g. primary (N-P-K) or secondary (Ca-Mg-S) macronutrients, and/or micronutrients (B, Cu, Fe, chloride, Mn, Mo and Zn) to vegetation.

Suitable fertiliser materials that can be used in the controlled release granules of the invention include, but are not limited to, water-soluble and water-insoluble materials, such as ammonium sulphate, ammonium chloride, ammonium nitrate, ammonium phosphates, sodium nitrate, potassium nitrate, calcium nitrate, calcium phosphates and their hydrates (in the form of, for example, triple super phosphate), potassium chloride, potassium sulphate, potassium carbonate, sodium phosphates, potassium phosphates, urea, methyleneurea, compounds capable of providing vegetation a micronutrient, such as copper, magnesium, zinc, calcium, boron, molybdenum, manganese, iron and nickel, magnesium sulphate, an iron chelate, manganese sulphate, nickel sulphate, zinc sulphate, copper sulphate, animal dung fertilisers, organic fertilisers and mixtures thereof.

In addition to urea and methyleneurea, other types of bioavailable nitrogen compounds that can be used in suitable urea based fertiliser-containing granular substrate include a methyleneurea oligomer or a mix of methyleneurea oligomers as represented by the formula NH₂CONH(CH₂NHCONH₂)ₙH, where n is an integer from 1-10. Such methyleneurea oligomers include methylenediurea (NH₂CONHCH₂NHCONH₂), dimethylenetriurea (NH₂CONHCH₂NHCONHCH₂NHCONH₂), trimethylenetetraurea and tetramethylenepentaurea. Certain suitable mixes of methyleneurea oligomers are commercially available such as Nutralene^{®} by Nu-Gro Technologies, Canada, Methex-40 by Homestead Corporation and as Nitroform^{®}.

Suitably, the fertiliser material for use in the granules of the invention is a mixture of urea, potassium nitrate and triple super phosphate. In one embodiment of the invention, the fertiliser material further comprises ammonium sulphate. The skilled man will be able to select the amount of the different fertiliser materials best suited for his purpose: typical N-P-K levels and ratios for specific uses are well-known in the art. Typically, the mix of fertiliser material will contain a higher concentration of nitrogen (e.g. N-P-K of 33-3-3 or 29-3-4). However, such a rate may be adjusted in, for example, fertilisers to be used on newly germinated plants, where the N-P-K ratio may be 10-10-10, for example.

The granule of the invention may also contain various optional ingredients known to persons skilled in the art. For example, auxiliaries such as binders, adjuvants, rewetting agents, disintegration aids, de-dusting agents, stabilisers, surfactants, dyes and similar optional ingredients can be included to provide controlled release granules that are safely handled and convenient to apply accurately to areas in need of treatment. Furthermore, other pesticides (e.g. herbicides, insecticides, fungicides or growth regulators) can also be present on or within the granular substrate.

Suitable granules can be virtually any desired shape, for example, spheres, cylinders, ellipses, rods, cones, discs, needles and irregular shapes. Ideally, the granules are approximately spherical and have a smooth surface, which lends to desired flow characteristics of the granules in bulk form.

The granules typically have a particle size in the range of about 0.1 to about 30 mm, particularly between about 0.25 to about 20 mm, and more particularly between about 0.5 to about 15 mm, although sizes outside this range can be used.

The present invention also provides a process for preparing the controlled release granules of the invention, the process comprising
a) making an emulsion of pesticide in a C4 to C18 alkyl ester oil;
b) adding the emulsion to a solid substrate that is in the form of a fine powder under conditions where granulation will occur;
c) drying the resultant granules.

There may be mentioned an alternative process for preparing the controlled release granules of the invention, the process comprising
a) adding a solid pesticide to a solid substrate;
b) adding a water in oil emulsion that does not contain any pesticide, under conditions where granulation will occur;
c) drying the resultant granules.

In preparing controlled release granules of the present invention, some problems were encountered and had to be overcome. Typical granulation processes for preparing granules of mesotrione, for example involve use of an aqueous mesotrione millbase which is added to the solid substrate material (which is in the form of a fine powder). Granules will start to form once the moisture content is at a certain level. In preparing the controlled release granules, simply adding the oil separately from the mesotrione millbase meant that granulation did not proceed well and did not result in granules with the desired properties: if oil was added first, granulation occurred before the mesotrione was present resulting in an uneven distribution of mesotrione throughout the granule; if mesotrione was added first the opposite occurred and the oil was not evenly distributed throughout the granule. In overcoming this problem, it was found that the controlled release granules of the present invention could be prepared not from an aqueous mesotrione millbase but from an emulsion made from the mesotrione millbase and the oil. Using such an emulsion, on granulation, both the oil and the mesotrione are distributed evenly throughout the granule. When making granules of the invention using other pesticides, it may be possible to dissolve or suspend the pesticide in the oil, instead of making an emulsion, depending on the physical properties of the pesticide.

Suitably pesticide millbases for use in this invention may be prepared by the methods described in PCT application WO 2005/055714, or by the application and adaptation of known methods used or described in the chemical literature. For example, water, acetic acid, a non-ionic surfactant (e.g. tristyrylphenol-polyglycolether) and pesticide are mixed together. Copper hydroxide is then added. An antifoaming agent is used (e.g. polydimethylsiloxane) along with an optional thickener (e.g. xanthan gum) and/or adjuvant (e.g. ammonium nitrate) and the millbase is mixed until uniform. Suitably, the millbase comprises pesticide, tristyrylphenol-polyglycolether, acetic acid, copper hydroxide, polydimethylsiloxane, ammonium nitrate and water.

Of course, the skilled man will appreciate that in order to form the pesticide-millbase-oil emulsion, surfactants may well be required in addition to the millbase and oil. In addition, the skilled man will be well aware of the conditions required to enhance granulation and will be able to change the mixing rate, rate of addition of the liquid to the solid feedstock and the composition of the filter/binder in the solid feedstock, in order to achieve an efficient granulation process.

A broad range of surface-active agents are advantageously employed in making the pesticide-oil emulsion of the invention. The surface-active agents may be anionic, cationic, non-ionic or polymeric in character. Examples of suitable anionic, non-ionic and cationic surfactants are listed, for example, in U.S. Patent No. 6,063,732 column 5, line 1 to column 6, line 2.

Furthermore, the surfactants customarily employed in formulation technology, which are described, *inter alia,* in "Mc Cutcheon's Detergents and Emulsifiers Annual" MC Publishing Corp., Ridgewood N.J., 1981, Stache, H., "Tensid-Taschenbuch", Carl Hanser Verlag, MunichNienna, 1981 and M. and J. Ash, "Encyclopedia of Surfactants", Vol I-III, Chemical Publishing Co., New York, 1980-81, are also suitable for preparation of the granules according to the invention.

Typical surface active agents include salts of alkyl sulfates, such as diethanolammonium lauryl sulphate; alkylarylsulfonate salts, such as calcium dodecylbenzenesulfonate; alkylphenol-alkylene oxide addition products, such as nonylphenol-C.sub. 18 ethoxylate; alcohol-alkylene oxide addition products, such as tridecyl alcohol-C.sub. 16 ethoxylate; soaps, such as sodium stearate; alkylnaphthalenesulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; and salts of mono and dialkyl phosphate esters. Suitably, the surfactant is a phosphate ester, more suitably a phosphate ester of an alkyl polyethoxyethanol such as Stepfac^{®} 8180.

After granulation has occurred, a drying agent and/or flow aid may be added to the newly formed granules before they are dried. Suitable drying agents and/or flow aids include, but are not limited to silicas such as HiSil 233 and other drying agents such as talcum powder etc. Suitably the drying agent/flow aid is HiSil 233.

When formulated with a herbicide, the controlled release granule of the invention may be used against a large number of agronomically important weeds, including, but not limited to, monocotyledonous weeds such as *Agrostis spp., Digitaria spp.* (e.g. *D. ischaemum, D. sanguinalis*), *Avena spp., Setaria spp., Lolium spp., Echinochloa spp., Scirpus spp., Monochoria spp., Sagittaria spp., Bromus spp., Alopecurus spp., Sorghum halepense spp., Rottboellia spp., Cyperus spp.* (e.g. *Cyperus esculentus)* and dicotyledonous weeds such as *Stellaria spp., Nasturtium spp., Sinapis spp., Solanum spp., Phaseolus spp., Taraxacum* spp.(e.g. *Taraxacum officinale*), *Trifolium spp.* (e.g. *Trifolium repens*), *Abutilon spp., Sida spp., Xanthium spp., Amaranthus spp., Chenopodium spp., Ipomoea spp., Chrysanthemum spp., Galium,* spp. *Viola spp.* and *Veronica spp..*

Among the weeds which may be controlled by the controlled release granule of the invention, there may be mentioned large and smooth crabgrass, dandelion, white and red clover, chickweed, henbit, corn speedwell, oxalis, nimbleweed, bent grass, buckhorn and broadleaf plantain, dollarweed (pennywort), FL pusley, lambsquarters, knotweed, ragweed, wild violets, pigweed, pennywort and hedge weed. Suitably, the weeds which may be controlled are dollarweed, pennywort and oxalis.

For the purposes of the present invention, the term 'weeds' includes undesirable crop species such as volunteer crops. For example, in the context of turf grass crops such as on a golf course, creeping bentgrass putting green turf can be considered a 'volunteer' if found in a fairway section where a different variety of grass is being cultivated. The other grasses listed below can, similarly, be considered weeds when found in the wrong place.

The 'locus' is intended to include soil, seeds, and seedlings as well as established vegetation.

The benefits of the present invention are seen most when the controlled release granule is applied to kill weeds in growing crops of useful plants: such as maize (corn) including field corn, pop corn and sweet corn; cotton, wheat, rice, oats, potato sugarbeet, plantation crops (such as bananas, fruit trees, rubber trees, tree nurseries), vines, asparagus, bushberries (such as blueberries), caneberries, craberries, flax, grain sorghum, okra, peppermint, rhubarb, spearmint and sugarcane.

'Crops' are understood to also include various turf grasses including, but not limited to, the cool-season turf grasses and the warm-season turf grasses.

Cool season turfgrasses include, for example, bluegrasses (*Poa L.),* such as Kentucky bluegrass (*Poa pratensis* L.), rough bluegrass (*Poa trivialis* L.), Canada bluegrass (*Poa compressa* L.) and annual bluegrass (*Poa annua* L.); bentgrasses (*Agrostis* L.), such as creeping bentgrass (*Agrostis palustris* Huds.), colonial bentgrass (*Agrostis tenius* Sibth.), velvet bentgrass (*Agrostis canina* L.) and redtop (*Agrostis alba* L.); fescues (*Festuca* L.), such as tall fescue (*Festuca arundinacea* Schreb.), meadow fescue (*Festuca elatior* L.) and fine fescues such as creeping red fescue (*Festuca rubra* L.), chewings fescue (*Festuca rubra* var. commutata Gaud.), sheep fescue (*Festuca ovina* L.) and hard fescue (*Festuca longifolia*); and ryegrasses (*Lolium* L.), such as perennial ryegrass (*Lolium perenne* L.) and annual (Italian) ryegrass (*Lolium multiflorum* Lam.).

Warm season turfgrasses include, for example, Bermudagrasses *(Cynodon* L. C. Rich), including hybrid and common Bermudagrass; Zoysiagrasses (*Zoysia Willd*.), St. Augustinegrass (*Stenotaphrum secundatum* (Walt.) Kuntze); and centipedegrass (*Eremochloa ophiuroides* (Munro.) Hack.).

In addition 'crops' are to be understood to include those crops that have been made tolerant to pests and pesticides, including herbicides or classes of herbicides (and, suitably, the herbicides of the present invention), as a result of conventional methods of breeding or genetic engineering. Tolerance to herbicides means a reduced susceptibility to damage caused by a particular herbicide compared to conventional crop breeds. Crops can be modified or bred so as to be tolerant, for example, to HPPD inhibitors such as mesotrione, EPSPS inhibitors such as glyphosate, or to glufosinate. It is noted that corn is inherently tolerant to mesotrione.

When formulated with an insecticide, controlled release granules may be used against a large number of agronomically important insect pests, including, but not limited to *Blatta spp, Locusta spp., Blatella spp., Agrotis spp., Plutella spp, Trichoplusia spp., Ostrinia spp., Manduca spp., Anthonomus spp., Diabrotica spp., Otiorhynchus spp., Scarabeidae spp., Tenebrio spp., Frankliniella spp., Thrips spp., Cimex spp., Dysdercus spp., Euchistus spp. Triatoma spp., Aphis spp., Bemisia spp., Coccus spp., Lecanium spp., Myzus spp., Nephotettix spp., Psylla spp., Trialeurodes spp., Planococcus spp., Pseudococcus spp., Vespa spp., Diprion spp., Aedes spp., Chyrsomyia spp., Drosophilia spp., Glossina spp., Musca spp., Phorbia spp., Tipula spp., Sciarra spp. Lepisma spp., Bradysia spp., Corythucha spp., Gargaphia spp., Stephanitis spp., Polyhagotarsonemus spp., Phytonemus spp., Pulvinaria spp., Diaspis spp., Parthenolecanium spp., Unaspis spp., Popillia spp., Choreutis spp., Fiorinia spp., Ceroplastes spp., Naupactus spp.* and *Scatella spp..*

When formulated with a fungicide, controlled release granules may be used against a large number of agronomically important fungal diseases, including, but not limited to *Fusarium spp. (F. oxyporum), Septoria spp. (S. tritici, S. nodorum, S. lycopersica), Phytopthora spp. (P. infestans), Alternaria spp. (A. solani), Rhizoctonia spp. (R. solani), Leveillula spp. (L. taurica), Phoma spp. (P. destructive), Fulvia spp. (F. filva), Botrytis spp. (B. cinema), Stemphylium spp. (S. solani), Colletotrichum spp. (C. coccodes* and *C. graminicola), Pyrencochaeta spp. (P. lycopersici), Sclerotinia spp. (S. scleotiorum* and *S. homoeocarpa), Didymella spp. (D. bryoniae), Gloeodes spp. (G. pomigena), Cladosporium spp. (C. cucumerinum), Pyricularia spp. (P. oryzae), Puccinia spp. (P. recondita, P. striiformis, P. hordes), Ascochyta spp., Monilinia spp., Sphaerotheca spp. (S. fuliginea), Podosphaera spp. (P. leucotricha), Erysiphe (E. graminis), Uncinula spp. (U. necator), Ustilago spp., Venturia spp. (V. inaequalis), Guignardia spp., Rhizopus spp., Trichothecium spp., Penicillium spp., Aspergillus spp., Pythium spp. Mycosphaerella spp. (M. fijiensis), Plasmopara spp. (P. viticola), Verticillium spp., Cercospora app. (C. arachidicola), Peronospora spp. (P. tabacina)* and *Glomerella spp..*

The following examples are for illustrative purposes only. The examples are not intended as necessarily representative of the overall testing performed and are not intended to limit the invention in any way. As one skilled in the art is aware, in pesticide testing, a significant number of factors that are not readily controllable can affect the results of individual tests and render them non-reproducible. For example, the results may vary depending on environmental factors, such as amount of sunlight and water, soil type, pH of the soil, temperature and humidity, among others. Also, for herbicides, the depth of planting, the application rate of individual and combined herbicides, the application rate of any antidote, and the ratio of the individual herbicides to one another and/or to an antidote as well as the nature of crops or weeds being tested can affect the results of the test. Results may vary from crop to crop within the crop varieties.

### EXAMPLES

### Example 1 - Preparation of controlled release granules

Urea (47.9wt%), triple super phosphate (5.8wt%) and potassium nitrate (5.8wt%), were combined with kaolin clay (23.2wt%). [Note, wt% refers to final granule composition but includes water removed during the drying process.] The mixture was transferred to a blender and blended to form a coarse powder. This coarse powder was transferred to a Fritsch Mill and milled down to a much finer particle size. The resultant powder was transferred to a Hobart mixer and the liquid components (mesotrione millbase, 0.4wt% or 1.4wt% (to give a final concentration of 0.12wt% or 0.4wt% mesotrione in the granule, respectively); methyl oleate (Agnique ME181) 15.8wt%; surfactant (Stepfac^{®} 8180), 1.1wt%; and water 3.8wt% or 2.8wt%) were added while mixing. Granulation occurred when a suitable moisture level was reached. After granulation, HiSil 233 was added and the granules are dried and sieved to remove dusty fines and large granules. The granules of the invention thus comprise the following components:

**TABLE 1**

| | |
|---|---|
| Urea | 47.9 wt% |
| Triple super phosphate | 5.8 wt% |
| Potassium nitrate | 5.8 wt% |
| Clay | 23.2 wt% |
| Mesotrione millbase | 0.4 wt%/1.4 wt% |
| Methyl oleate (ME 181) | 15.8 wt% |
| Stepfac^{®} 8180 | 1.1 wt% |
| Water¹ | 3.8 wt%/ 2.8 wt% |

In addition, control granules were also prepared in the same way but did not contain any oil.

### Example 2 - Determination of release rate in water

Controlled release mesotrione granules were prepared as described in Example 1. As a control, a liquid formulation of mesotrione was also sprayed onto Turf Builder® fertiliser granules (i.e. with on oil present).

For each granule type, 50g of test sample was placed in a glass vessel containing a paddle stirrer set at 40 rpm. 500ml deionised water was added to the vessel and a timer started. At regular time intervals, 2ml of the sample solution was removed and filtered through a 0.45 micron filer into a fresh bottle. 2ml of deionised water was added to the vessel to maintain a constant volume. 1ml of the filtered sample solution was mixed with 1ml acetonitrile, and transferred to an HPLC vial. HPLC analysis was performed to determine the amount of active ingredient present in each sample. The results are presented in Table 2.

**TABLE 2**

| Time interval (minutes) | % Mesotrione | |
|---|---|---|
| | Controlled release granules | Control (granules with no oil present) |
| 0 | 0.002 | 0.003 |
| 0.5 | 0.002 | 0.003 |
| 1 | 0.002 | 0.004 |
| 2 | 0.003 | 0.005 |
| 3 | 0.003 | 0.006 |
| 4 | 0.004 | 0.007 |
| 5 | 0.003 | 0.008 |
| 10 | 0.006 | 0.009 |
| 15 | 0.005 | 0.011 |
| 30 | 0.006 | 0.015 |
| 60 | 0.007 | 0.019 |
| 120 | 0.007 | 0.027 |
| 180 | 0.007 | 0.025 |
| 360 | 0.007 | 0.033 |
| 1440 | 0.008 | 0.028 |

The data shows that the relative rate of release of mesotrione from the controlled release granules is slower than that of the control granules. For example, after 1 minute, 0.002% mesotrione was detected in the controlled release granules compared to 0.004% in the control granules. After 30 minutes, 0.006% mesotrione was detected in the controlled release granules compared to 0.015% in the control granules. After 120 minutes, 0.007% mesotrione was detected in the controlled release granules compared to 0.027% in the control granules.

### Example 3 - Biological testing

The controlled release granules of the invention (as made in Example 1) were compared against control granules containing no oil and commercially available mesotrione containing granules. Granules were applied by hand using a shaker jar to established plots of *Stenotaphrum secundatum* variety Delmar (St. Augustinegrass) and *Cynodon dactylon* (common Bermudagrass) to evaluate the damage caused to these grass species. For weed control assays, granules were also applied to *Stenotaphrum secundatum* variety Delmar in which dollarweed *(Hydrocotyle spp.)* was naturally present and to *Cynodon dactylon* in which oxalis *(Oxalis spp.)* was naturally present and the control of these two weed species was evaluated. Damage to grass species and control of weed species was evaluated at 8, 14, 26 and 35 days after treatment. The study was carried out in triplicate.

Tables 3A to 3D show the results of this study (presented as mean averages), where (1) are the controlled release granules of Example 1, (2) are granules made by the process of Example 1 but lacking oil and (3) are commercially available mesotrione-containing granules, which include N-P-K fertilisers (29-3-4) and (4) are commercially available atrazine-containing granules (Bonus® S, Scotts Company), which includes N-P-K fertilisers (29-3-4).

**TABLE 3A**

| Treatment | | 8 DAT | | | |
|---|---|---|---|---|---|
| | | % damage | | % control | |
| Granule type | Rate(g ai/ha) | St Augustine grass | Bermudagrass | Dollarweed | Oxalis |
| Untreated | 0 | 0.0 a | 0.0 d | 0.0 e | 0.0 b |
| 1 | 168.0 | 0.0 a | 16.7 c | 18.3 c | 38.3 a |
| | 560.0 | 0.0 a | 26.7 abc | 30.0 ab | 48.3 a |
| 2 | 168.0 | 0.0 a | 23.3 bc | 15.0 cd | 38.3 a |
| | 560.0 | 0.0 a | 25.0 bc | 25.0 b | 45.0 a |
| 3 | 168.0 | 0.0 a | 28.3 abc | 31.7 ab | 43.3 a |
| | 280.0 | 0.0 a | 40.0 a | 30.0 ab | 50.0 a |
| | 560.0 | 0.0 a | 36.7 ab | 35.0 a | 48.3 a |
| 4 | 1120.0 | 0.0 a | - | 10.0 d | - |

**TABLE 3B**

| Treatment | | 14 DAT | | | |
|---|---|---|---|---|---|
| | | % damage | | % control | |
| Granule type | Rate(g ai/ha) | St Augustine grass | Bermudagrass | Dollarweed | Oxalis |
| Untreated | 0 | 0.0 d | 0.0 d | 0.0 e | 0.0 d |
| 1 | 168.0 | 0.0 d | 21.7 c | 43.3 c | 53.3 c |
| | 560.0 | 8.3 bc | 31.7 c | 60.0 b | 65.0 b |
| 2 | 168.0 | 1.7 d | 23.3 c | 45.0 c | 48.3 c |
| | 560.0 | 11.7 b | 45.0 b | 56.7 b | 68.3 b |
| 3 | 168.0 | 5.0 cd | 28.3 c | 60.0 b | 51.7 c |
| | 280.0 | 10.0 bc | 43.3 b | 61.7 b | 71.7 b |
| | 560.0 | 23.3 a | 66.7 a | 71.7 a | 81.7 a |
| 4 | 1120.0 | 0.0 d | - | 10.0 d | - |

**TABLE 3C**

| Treatment | | 26 DAT | | | |
|---|---|---|---|---|---|
| | | % damage | | % control | |
| Granule type | Rate(g ai/ha) | St. Augustine grass | Bermudagrass | Dollarweed | Oxalis |
| Untreated | 0 | 0.0 b | 0.0 c | 0.0 e | 0.0 c |
| 1 | 168.0 | 0.0 b | 3.3 c | 58.3 d | 58.3 b |
| | 560.0 | 3.3 b | 11.7 c | 83.3 ab | 81.7 ab |
| 2 | 168.0 | 0.0 b | 6.7 c | 73.3 bc | 55.0 b |
| | 560.0 | 6.7 b | 31.7 b | 91.7 a | 81.7 ab |
| 3 | 168.0 | 0.0 b | 3.3 c | 66.7 cd | 46.7 b |
| | 280.0 | 3.3 b | 11.7 c | 81.7 ab | 83.3 ab |
| | 560.0 | 13.3 a | 53.3 a | 91.7 a | 98.3 a |
| 4 | 1120.0 | 0.0 b | - | 10.0 e | - |

**TABLE 3D**

| Treatment | | 35 DAT | | | |
|---|---|---|---|---|---|
| | | % damage | | % control | |
| Granule type | Rate(g ai/ha) | St. Augustine grass | Bermudagrass | Dollarweed | Oxalis |
| Untreated | 0 | 0.0 a | 0.0 b | 0.0 d | 0.0 c |
| 1 | 168.0 | 0.0 a | 0.0 b | 66.7 b | 55.0 ab |
| | 560.0 | 1.7 a | 5.0 b | 96.3 a | 76.7 ab |
| 2 | 168.0 | 0.0 a | 1.7 b | 76.7 ab | 61.7 ab |
| | 560.0 | 3.3 a | 16.7 b | 96.0 a | 83.3 ab |
| 3 | 168.0 | 0.0 a | 1.7 b | 65.0 b | 45.0 b |
| | 280.0 | 0.0 a | 6.7 b | 91.3 a | 81.7 ab |
| | 560.0 | 6.7 a | 31.7 a | 90.7 a | 91.7 a |
| 4 | 1120.0 | 0.0 a | - | 21.7 c | - |

| | | | | | |
|---|---|---|---|---|---|
| Note: Means followed by the same letter do not significantly differ (P=.05, Student-Newman-Keuls) | | | | | |

### Example 4 - Biological testing

The above experiment was repeated using a commercial type spreader to apply granules to established plots of *Stenotaphrum secundatum* variety Floratum (St. Augustinegrass) and *Cynodon dactylon* variety Tifway (Hybrid Bermudagrass) to evaluate the damage caused to these grass species. Granules were also applied to *Stenotaphrum secundatum* variety Floratum in which dollarweed *(Hydrocotyle spp.)* was naturally present and the control of the dollar weed *(Hydrocotyle spp.)* was evaluated. Damage to grass species and control of weed species was evaluated at 11 and 35 days after treatment (DAT).

Table 4 shows the results of this study (presented as mean averages), where (1) are the controlled release granules of Example 1, (2) are granules made by the process of Example 1 but lacking oil, (3) are commercially available mesotrione-containing granules, which include N-P-K fertilisers (29-3-4), and (4) are commercially available atrazine-containing granules (Bonus® S, Scotts Company), which includes N-P-K fertilisers (29-3-4).

**TABLE 4**

| Treatment | | St Augustine grass (% damage) | | Bermudagrass (% damage) | | Dollarweed (% control) | |
|---|---|---|---|---|---|---|---|
| Granule type | Rate(g ai/ha) | 11 DAT | 35 DAT | 11 DAT | 35 DAT | 11 DAT | 35 DAT |
| Untreated | 0 | 0.0 | 0.0 | 0.0 | 0.0 | 0.0 | 0.0 |
| 1 | 168.0 | 2.0 | 0.0 | 0.0 | 0.0 | 40.0 | 70.0 |
| | 336.0 | 5.0 | 0.0 | 2.0 | 0.0 | 50.0 | 80.0 |
| | 560.0 | 5.0 | 5.0 | 10.0 | 0.0 | 50.0 | 85.0 |
| | 1120.0 | 20.0 | 10.0 | 25.0 | 0.0 | 55.0 | 90.0 |
| 2 | 168.0 | 5.0 | 0.0 | 5.0 | 0.0 | 45.0 | 75.0 |
| | 336.0 | 10.0 | 5.0 | 15.0 | 0.0 | 50.0 | 85.0 |
| | 560.0 | 15.0 | 0.0 | 35.0 | 0.0 | 50.0 | 90.0 |
| | 1120.0 | 25.0 | 15.0 | 60.0 | 0.0 | 55.0 | 95.0 |
| 3 | 168.0 | 2.0 | 0.0 | 5.0 | 0.0 | 50.0 | 75.0 |
| | 336.0 | 10.0 | 0.0 | 20.0 | 0.0 | 50.0 | 85.0 |
| | 560.0 | 20.0 | 5.0 | 35.0 | 0.0 | 55.0 | 90.0 |
| | 1120.0 | 30.0 | 10.0 | 70.0 | 0.0 | 55.0 | 95.0 |
| 4 | 1120.0 | 0.0 | - | 25.0 | 0.0 | - | 70.0 |
| | 2240.0 | 0.0 | - | 45.0 | 0.0 | - | 75.0 |

### Example 5 - Biological testing

A repeat of Example 3 was carried out using, with an additional data point recorded for control of oxalis *(Oxalis spp.)* which was naturally present in *Cynodon dactylon* variety Tifway (Bermudagrass). Data points were collected at 8 and 31 days after treatment.

Tables 5A and 5B show the results of this study (presented as mean averages), where (1) are the controlled release granules of Example 1, (2) are granules made by the process of Example 1 but lacking oil, (3) are commercially available mesotrione-containing granules, which include N-P-K fertilisers (29-3-4), and (4) are commercially available atrazine-containing granules (Bonus® S, Scotts Company), which includes N-P-K fertilisers (29-3-4).

**TABLE 5A**

| Treatment | | 8 DAT | | | |
|---|---|---|---|---|---|
| | | % damage | | % control | |
| Granule type | Rate(g ai/ha) | St Augustine grass | Bermudagrass | Dollar weed | Oxalis |
| Untreated | 0 | 0.0 | 0.0 | 0.0 | 0.0 |
| 1 | 168.0 | 2.0 | 0.0 | 50.0 | 60.0 |
| | 336.0 | 5.0 | 0.0 | 50.0 | 65.0 |
| | 560.0 | 5.0 | 5.0 | 60.0 | 65.0 |
| | 1120.0 | 10.0 | 10.0 | 65.0 | 70.0 |
| 2 | 168.0 | 5.0 | 5.0 | 50.0 | 60.0 |
| | 336.0 | 15.0 | 15.0 | 60.0 | 70.0 |
| | 560.0 | 20.0 | 25.0 | 65.0 | 70.0 |
| | 1120.0 | 45.0 | 55.0 | 70.0 | 80.0 |
| 3 | 168.0 | 5.0 | 0.0 | 50.0 | 75.0 |
| | 336.0 | 5.0 | 5.0 | 60.0 | 80.0 |
| | 560.0 | 15.0 | 5.0 | 60.0 | 80.0 |
| | 1120.0 | 40.0 | 45.0 | 65.0 | 80.0 |
| 4 | 1120.0 | 0.0 | - | 40.0 | - |
| | 2240.0 | 0.0 | - | 45.0 | - |

**TABLE 5B**

| Treatment | | 31 DAT | | | |
|---|---|---|---|---|---|
| | | % damage | | % control | |
| Granule type | Rate(g ai/ha) | St Augustine grass | Bermudagrass | Dollar weed | Oxalis |
| Untreated | 0 | 0.0 | 0.0 | 0.0 | 0.0 |
| 1 | 168.0 | 0.0 | 0.0 | 50.0 | 20.0 |
| | 336.0 | 0.0 | 0.0 | 55.0 | 25.0 |
| | 560.0 | 2.0 | 0.0 | 60.0 | 55.0 |
| | 1120.0 | 5.0 | 0.0 | 75.0 | 70.0 |
| 2 | 168.0 | 0.0 | 0.0 | 60.0 | 50.0 |
| | 336.0 | 5.0 | 0.0 | 65.0 | 55.0 |
| | 560.0 | 2.0 | 0.0 | 75.0 | 60.0 |
| | 1120.0 | 5.0 | 0.0 | 80.0 | 65.0 |
| 3 | 168.0 | 0.0 | 0.0 | 50.0 | 50.0 |
| | 336.0 | 2.0 | 0.0 | 55.0 | 55.0 |
| | 560.0 | 0.0 | 0.0 | 70.0 | 55.0 |
| | 1120.0 | 5.0 | 0.0 | 85.0 | 65.0 |
| 4 | 1120.0 | 0.0 | - | 40.0 | - |
| | 2240.0 | 0.0 | - | 50.0 | - |

### Example 6 - Preparation of controlled release granules

Urea (47.9wt%), triple super phosphate (5.8wt%) and potassium nitrate (5.8wt%), were mixed with kaolin clay (23.2wt%) (wt% refers to the final granule composition, but includes water removed during the drying process). The mixture was transferred to a blender and blended to form a coarse powder, that was subsequently milled to a powder using a Fritsch Mill. The resultant powder was transferred to a Hobart mixer. While mixing, a compound of formula 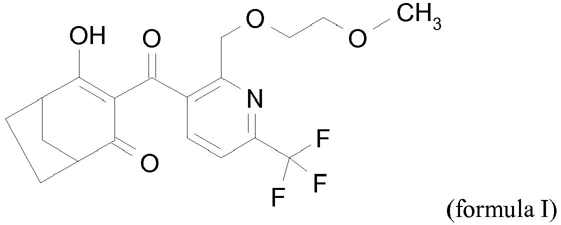 was added (in an amount to give a 0.2wt% concentration), in solid form, and allowed to evenly distribute throughout the powder. 15.8wt% oil (methyl oleate, Agnique ME181), 1.1wt% surfactant (Stepfac^{®} 8180), and 3.8wt% water were added while mixing. Granulation occurred when a suitable moisture level was reached. After granulation, HiSil 233 was added and the granules were dried and sieved to remove dusty fines and large granules.

### Example 7 - Determination of release rate in water

The release rate of the compound of formula I from granules prepared in Example 6 was assessed, as described in Example 2. The results are presented in Table 6.

**TABLE 6**

| Time interval (minutes) | % compound of formula I | |
|---|---|---|
| | Controlled release granules | Control (granules with no oil present) |
| 0 | 0.003 | 0.041 |
| 0.5 | 0.005 | 0.048 |
| 1 | 0.006 | 0.050 |
| 2 | 0.007 | 0.054 |
| 3 | 0.008 | 0.058 |
| 4 | 0.009 | 0.060 |
| 5 | 0.009 | 0.061 |
| 10 | 0.011 | 0.068 |
| 15 | 0.013 | 0.071 |
| 30 | 0.015 | 0.082 |
| 60 | 0.017 | 0.063 |
| 120 | 0.019 | 0.064 |
| 180 | 0.019 | 0.065 |
| 360 | 0.019 | 0.069 |
| 1440 | 0.023 | 0.071 |

The data shows that the relative rate of release of the compound of formula I from the controlled release granules is slower than that of the control granules. For example, after 1 minute, 0.006% compound of formula I was detected in the controlled release granules compared to 0.050% in the control granules. After 30 minutes, 0.015% compound of formula I was detected in the controlled release granules compared to 0.082% in the control granules. After 120 minutes, 0.019% compound of formula I was detected in the controlled release granules compared to 0.065% in the control granules.

### Example 8 - Biological testing

The controlled release granules of the invention as made in Example 6 were compared against control granules containing no oil. Granules were applied to plots of *Stenotaphrum secundatum* variety Delmar (St Augustinegrass) and *Cynodon dactylon* (Comon Bermudagrass) to evaluate the damage caused to these grass species. For weed control assays, granules were also applied to *Stenotaphrum secundatum* variety Delmar in which white clover (*Trifolium repens*) was present, and the control of this weed species evaluated. Damage to grass species and control of weed species was evaluated at 7, 11 and 15 days after treatment.

Tables 7A and 7B show the results of this study (presented as mean averages), where (1) are the controlled release granules of Example 6, (2) are granules made by spraying the compound of formula I onto DG Lite granules, (3) is a liquid formulation of the compound of formula I, and (4) is an untreated control.

**TABLE 7A**

| Treatment | Rate lbs ai/A | St Augustinegrass (% damage) | | | Bermudagrass (% damage) | | |
|---|---|---|---|---|---|---|---|
| | | 7 DAT | 11 DAT | 15 DAT | 7 DAT | 11 DAT | 15 DAT |
| 1 | 0.10 | 23.3 | 10.0 | 5.0 | 16.0 | 4.0 | 0.0 |
| | 0.25 | 36.7 | 20.0 | 11.0 | 33.0 | 15.0 | 3.3 |
| 2 | 0.10 | 8.0 | 1.3 | 0.7 | 6.0 | 0.0 | 0.0 |
| | 0.25 | 20.0 | 5.7 | 3.0 | 23.0 | 8.0 | 2.3 |
| 3 | 0.10 | 36.7 | 20.0 | 9.3 | 30.0 | 18.0 | 10.0 |
| | 0.25 | 60.0 | 43.3 | 20.0 | 66.0 | 25.0 | 10.0 |
| 4 | 0 | 0.0 | 0.0 | 0.0 | 0.0 | 0.0 | 0.0 |

**TABLE 7B**

| Treatment | Rate lbs ai/A | White Clover (% control) | | |
|---|---|---|---|---|
| | | 7 DAT | 11 DAT | 15 DAT |
| 1 | 0.10 | 53.3 | 70.0 | 76.7 |
| | 0.25 | 66.7 | 80.0 | 85.0 |
| 2 | 0.10 | 46.7 | 63.3 | 66.7 |
| | 0.25 | 56.7 | 76.7 | 78.3 |
| 3 | 0.10 | 63.3 | 78.3 | 81.7 |
| | 0.25 | 71.7 | 86.7 | 90.0 |
| 4 | 0 | 0.0 | 0.0 | 0.0 |

## Claims

1. A controlled release granule comprising a solid substrate, a herbicide selected from the group consisting of mesotrione and a compound of formula 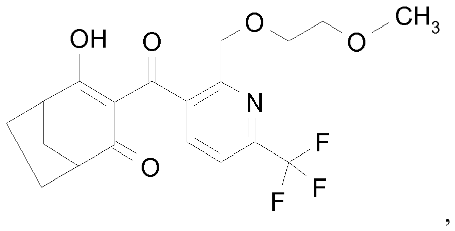 and a C₄ to C₁₈ alkyl ester oil present in the granule at a concentration of between 5 wt% and 30 wt%, the herbicide and oil being distributed throughout the granule.

2. The controlled release granule of claim 1, wherein the pesticide is mesotrione.

3. The controlled release granule of claim 2, wherein the mesotrione is in the form of a metal chelate.

4. The controlled release granule of claim 3, wherein the mesotrione is in the form of a copper chelate.

5. The controlled release granule of any of claims 1 to 4, wherein the oil is methyl oleate.

6. The controlled release granule of any one of claims 1 to 5 which further comprises a fertiliser.

7. The controlled release granule of claim 6, wherein the fertiliser is a mixture of urea, potassium nitrate and triple super phosphate.

8. The controlled release granule of any one of claims 1 to 7, wherein the solid substrate is an inert material.

9. The controlled release granule of claim 8, wherein the solid substrate is kaolin clay.

10. A process for preparing a controlled release granule according to claim 1 comprising:
a) making an emulsion of mesotrione in a C4 to C18 alkyl ester oil;
b) adding the emulsion to a solid substrate in the form of a fine powder under conditions where granulation will occur;
c) drying the resultant granules.

11. A method of controlling or modifying the growth of weeds comprising applying the controlled release herbicide-containing granule of any one of claims 1 to 9 to the locus of the weeds.

## Patentansprüche

1. Granulat mit kontrollierter Freisetzung, umfassend ein festes Substrat, ein aus der aus Mesotrion und einer Verbindung der Formel 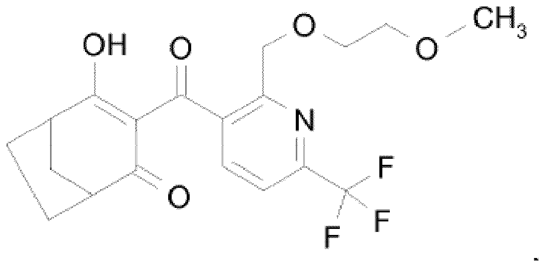 bestehenden Gruppe ausgewähltes Herbizid und ein C₄- bis C₁₈-Alkylesteröl, das in dem Granulat in einer Konzentration zwischen 5 Gew.-% und 30 Gew.-% vorliegt, wobei das Herbizid und das Öl über das ganze Granulat verteilt sind.

2. Granulat mit kontrollierter Freisetzung nach Anspruch 1, wobei es sich bei dem Pestizid um Mesotrion handelt.

3. Granulat mit kontrollierter Freisetzung nach Anspruch 2, wobei das Mesotrion in Form eines Metallchelats vorliegt.

4. Granulat mit kontrollierter Freisetzung nach Anspruch 3, wobei das Mesotrion in Form eines Kupferchelats vorliegt.

5. Granulat mit kontrollierter Freisetzung nach einem der Ansprüche 1 bis 4, wobei es sich bei dem Öl um Ölsäuremethylester handelt.

6. Granulat mit kontrollierter Freisetzung nach einem der Ansprüche 1 bis 5, welches weiterhin ein Düngemittel umfasst.

7. Granulat mit kontrollierter Freisetzung nach Anspruch 6, wobei es sich bei dem Düngemittel um eine Mischung aus Harnstoff, Kaliumnitrat und Triplesuperphosphat handelt.

8. Granulat mit kontrollierter Freisetzung nach einem der Ansprüche 1 bis 7, wobei es sich bei dem festen Substrat um ein Inertmaterial handelt.

9. Granulat mit kontrollierter Freisetzung nach Anspruch 8, wobei es sich bei dem festen Substrat um Kaolinton handelt.

10. Verfahren zur Herstellung eines Granulats mit kontrollierter Freisetzung nach Anspruch 1, bei dem man:
a) eine Emulsion von Mesotrion in einem C₄- bis C₁₈-Alkylesteröl anfertigt,
b) die Emulsion zu einem festen Substrat in Form eines feinen Pulvers gibt, unter Bedingungen, bei denen eine Granulierung stattfindet,
c) das erhaltene Granulat trocknet.

11. Verfahren zur Bekämpfung oder zur Modifizierung des Wachstums von Unkräutern, bei dem man das herbizidhaltige Granulat mit kontrollierter Freisetzung nach einem der Ansprüche 1 bis 9 auf den Standort der Unkräuter ausbringt.

## Revendications

1. Granulé à libération contrôlée, comprenant un substrat solide, un herbicide choisi dans le groupe constitué par la mésotrione et un composé de formule 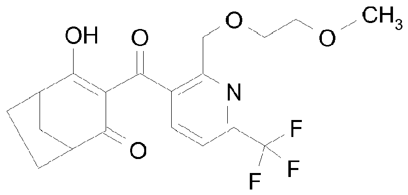 et une huile d'ester de C₄ à C₁₈ alkyle présente dans le granulé selon une concentration comprise entre 5% en poids et 30% en poids, l'herbicide et l'huile étant distribués dans l'ensemble du granulé.

2. Granulé à libération contrôlée selon la revendication 1, dans lequel le pesticide est la mésotrione.

3. Granulé à libération contrôlée selon la revendication 2, dans lequel la mésotrione est sous la forme d'un chélate métallique.

4. Granulé à libération contrôlée selon la revendication 3, dans lequel la mésotrione est sous la forme d'un chélate de cuivre.

5. Granulé à libération contrôlée selon l'une quelconque des revendications 1 à 4, dans lequel l'huile est l'oléate de méthyle.

6. Granulé à libération contrôlée selon l'une quelconque des revendications 1 à 5, comprenant en outre un fertilisant.

7. Granulé à libération contrôlée selon la revendication 6, dans lequel le fertilisant est un mélange d'urée, de nitrate de potassium et de superphosphate triple.

8. Granulé à libération contrôlée selon l'une quelconque des revendications 1 à 7, dans lequel le substrat solide est un matériau inerte.

9. Granulé à libération contrôlée selon la revendication 8, dans lequel le substrat solide est une argile de type kaolin.

10. Procédé de préparation d'un granulé à libération contrôlée selon la revendication 1, comprenant
a) la préparation d'une émulsion de mésotrione dans une huile d'ester de C₄ à C₁₈ alkyle ;
b) l'addition de l'émulsion à un substrat solide sous la forme d'une poudre fine dans des conditions dans lesquelles une granulation aura lieu ;
c) le séchage des granulés résultants.

11. Méthode de contrôle ou de modification de la croissance d'adventices, comprenant l'application du granulé à libération contrôlée contenant l'herbicide selon l'une quelconque des revendications 1 à 9 au lieu où se développent les adventices.
